# EUROPEAN PATENT APPLICATION

(11) **EP 1 704 772 A2**
(43) Date of publication of application: **27.09.2006**
(21) Application number: 06076020.4
(22) Date of filing: 01.07.2002
(51) Int. Cl.: A01J 5/007, A01J 5/013, A01J 5/017, A01J 5/08

(54) **A device for milking an animal**

(30) Priority: 27.07.2001 NL 1018649
(62) Divisional of application: 02077613.4
(71) Applicant: Lely Enterprises AG, 6300 ZUG (CH)
(72) Inventor: Van den Berg, Karel, 2971 BR Bleskensgraaf (NL); Voogd, Lucien Eliza Niels, 4143 HG Leerdam (NL)
(74) Representative: Corten, Maurice Jean F.M.

(57) **Abstract**

A device for milking an animal, such as a cow, provided with a milking machine with a teat cup (3) to be connected to a teat (5) of an animal, said teat cup (3) being provided with at least one temperature sensor (6), said device being provided with an activating device for activating the temperature sensor (6). The activating device is also suitable for deactivating the temperature sensor (6).

## Description

The invention relates to a device for milking an animal, such as cow, according to the preamble of claim 1.

Such a device is known from Dutch patent application NL 1012529.

Although said device and method function excellently, there remains continuously a desire for further improvement.

The invention aims at providing a device and a method enabling further improvement.

For that purpose, according to a first aspect of the invention, a device of the above-described type comprises the measures according to the characterizing part of claim 1. This makes it possible to prevent unnecessary energy consumption. Moreover, besides activating the temperature sensor, the activating device is also capable of activating other components required for possibly storing and processing the temperature values.

When the activating device is constituted by a detection device for detecting the presence of a teat in the teat cup, the temperature measurement can start at the moment when the teat enters the teat cup.

The device is preferably provided with an identification device for identifying an animal and the relevant teat and/or the relevant quarter.

Although the temperature values could be analysed by a farmer, it is preferred when the temperature sensor is capable of being connected with a computer processing unit for storing or processing respectively analysing the temperature measurement values. For enabling an accurate analysis it is preferred when the computer processing unit comprises a memory for storing reference temperature values, a comparing unit comparing the measured temperature values with the reference temperature values and issues a comparison result signal. Alternatively or additionally the computer processing unit comprises a comparing unit for comparing the measured temperature values emanating from different teats of the animal and for issuing a comparison result signal. Such a comparison may indicate a certain difference between the temperatures of the teats and/or quarters mutually. In dependence of the magnitude of the deviation certain signals (warning and/or control signals) may be issued.

A proper milking, not having a negative influence on the animal's health, needs in general a pre-stimulation by means of a pre-stimulation device for stimulating the teat and/or the quarter, so that a good blood circulation is realised. When the pre-stimulation device is controlled at least partially on the basis of the comparison result signal, a correct pre-stimulation may be obtained, the temperature measurement providing an indication for a good blood circulation.

The teat cup needs not necessarily to be a functioning teat cup but may also be a so-called cleaning teat cup. The invention is in particular suitable for application to a milking robot with a robot arm carrying a teat cup for automatically milking an animal.

The invention is further based on the insight that besides having a teat cup as a cleaning device, the invention may also be applied to other cleaning devices, such as brushes, rolls, etc..

The invention will now be explained in further detail with reference to the accompanying figures, in which:
Figure 1 shows a part of a milking robot arm with a teat cup provided with a temperature sensor, in a position in which a teat is about to enter the teat cup;
Figure 2 shows a part of a milking robot arm with a teat cup provided with a temperature sensor, in a position in which a teat is partially inserted in the teat cup;
Figure 3 shows a part of a milking robot arm with a teat cup provided with a temperature sensor, in a position in which a teat is completely inserted in the teat cup;
Figure 4 shows a diagram of measured temperature values and reference temperature values, and
Figure 5 is a schematic view of a teat with a part extending in the longitudinal direction of the teat of which part the temperature has been measured.

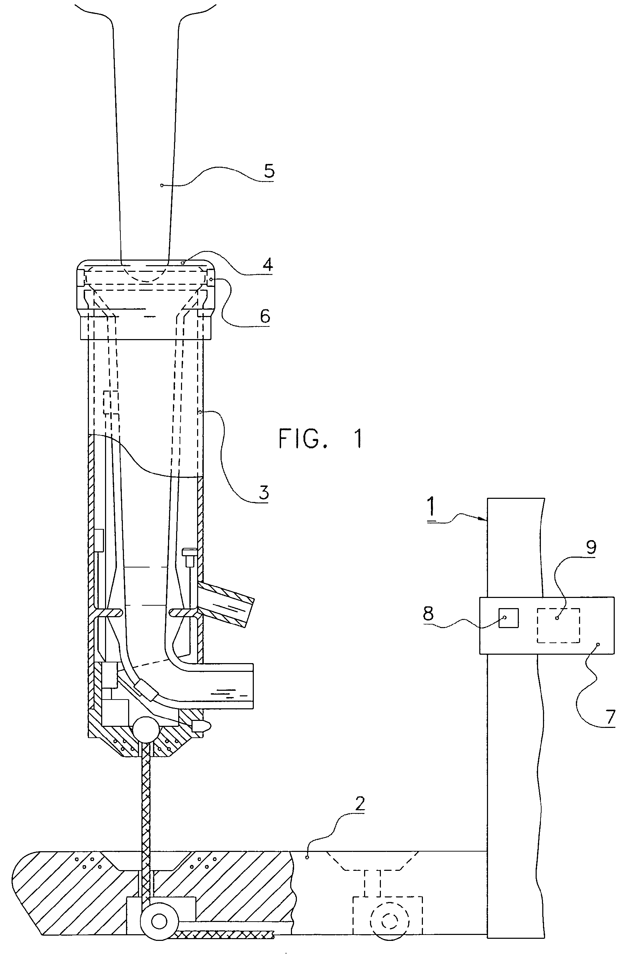

Figure 1 shows a part of a robot arm construction 1 of a (non-shown) milking robot. The robot arm construction 1 comprises a carrier 2 for carrying at least one teat cup 3. The embodiment only shows one teat cup 3. However, it will be possible that in dependence of the sort of animal being milked two or more teat cups may be carried by the carrier 2, or that one teat cup is used for milking several teats. The teat cup 3 comprises an opening 4 for receiving a teat 5. In the immediate vicinity of the teat receiving opening 4 there is disposed a temperature sensor 6.

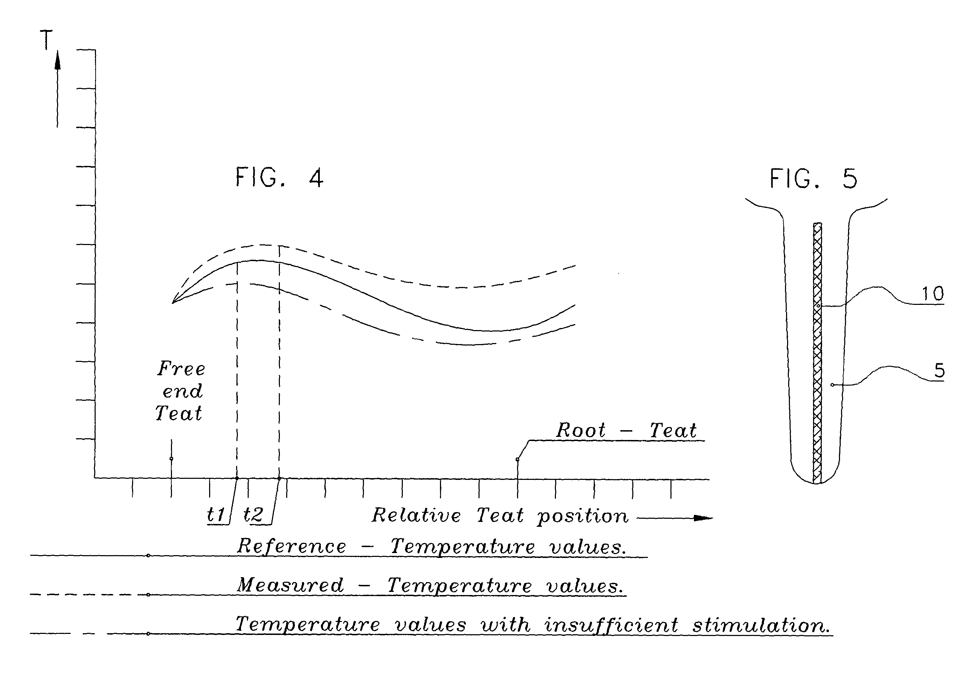

In the embodiment shown the temperature sensor 6 is ring-shaped, having a number of separate, juxtaposed sub-sensors for determining the temperature over the entire circumference of the teat 5. However, the invention is not restricted hereto, but also relates to a temperature sensor measuring only a part of the circumference of the teat 5. In the latter case the temperature will be measured of a part 10 of the teat 5, said part 10 extending in longitudinal direction (see Figure 5). By suitable positioning of the sensor it is further possible to measure the temperature of at least a part of the udder quarter belonging to the teat. It will also be obvious that hereinafter the term 'teat' may also comprise the relevant udder quarter of the animal.

The temperature sensor 6 may also be used as a detection means for detecting whether a teat 5 is present in the teat cup 3, or for detecting when the teat 5 enters or on the contrary leaves the teat cup 3. Of course, other means for detecting the presence of the teat in the teat cup may be provided as well.

Other parts of the teat cup 3 will not be detailed further, because they are known to the person skilled in the art.

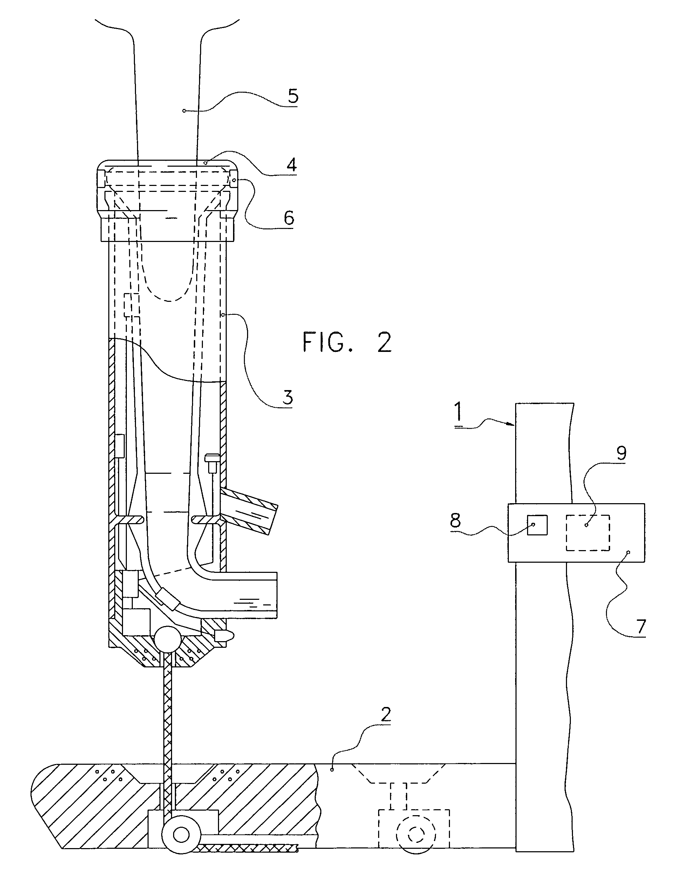

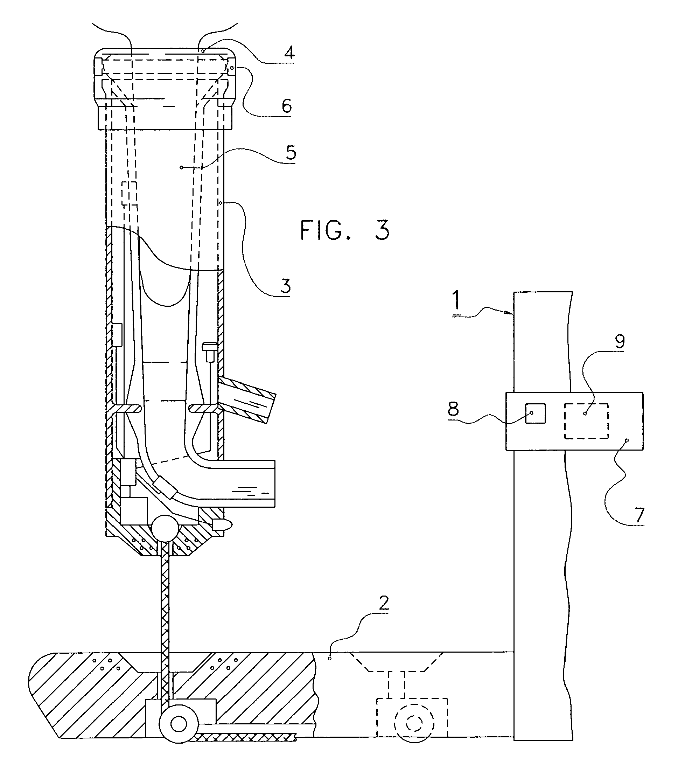

Figure 1 shows the position in which the teat is about to enter the teat receiving opening 4, whereas in the position shown in Figure 2 the teat 5 is partially inserted in the teat cup 3. Figure 3 shows the position in which the teat 5 is completely inserted in the teat cup 3.

During inserting the teat 5 into the teat cup 3, the temperature sensor 6 measures the temperature over the length of the teat 5, in the shown situation in which the sensor is ring-shaped over the length of the whole teat 5.

The measured temperature values may for example be indicated on a (non-shown) display, so that a manager respectively a farmer, in dependence of the measured value, may verify whether they are correct. If the displayed values deviate from those expected by the manager or the farmer, the latter may intervene or take action.

For the purpose of automating the milking process to a highest possible extent, the temperature sensor 6 is capable of being connected with a computer processing unit 7, schematically shown in the figures as being disposed e.g. on the robot arm construction 1. The connection may be a wireless connection or a cable connection or similar. The computer processing unit 7 comprises a memory 8 for storing measured values on the one hand, and for storing reference temperature values on the other hand. For that purpose different memories may be used as well. Although the values may be stored per group or herd of animals, for the sake of accuracy of performing the milking process, it is preferred when the device is provided with an identification device for identifying an animal and the relevant teat and/or the relevant quarter. Such an identification device is known per se and needs not be described in further detail. Thus the measured temperature values as well as the reference temperature values may be stored per animal.

The computer processing unit 7 comprises a comparing unit 9 for comparing the measured temperature values with the reference temperature values and for issuing a comparison result signal. The comparing unit may also mutually compare the temperature values emanating from different teats of the animal. This comparison result signal may serve as a warning signal for the manager or farmer, but may also serve for operating or adjusting a further component of the device for milking an animal. The comparison result signal may be based on a comparison threshold with an absolute or a relative value or similar.

Said further component is in particular constituted by a pre-stimulation device for stimulating the teat prior to milking. By means of this pre-stimulation device the blood circulation of the teat is increased, so that the milking can be performed properly, while the animal does not experience harmful effects. The measured temperature values may be compared with reference temperature values indicating a correct blood circulation for that animal, and when the comparison indicates that the measured temperature values correspond with the reference temperature values, the animal can be milked. However, when the comparison indicates that there is an impermissible difference between measured temperature values and reference temperature values, the comparison result signal is used for stopping the continuation of the connection of the teat cup and for activating again the pre-stimulation device, possibly with other operation parameters. Thus the stimulation device is controlled at least partially on the basis of the comparison result signal.

Figure 4 shows a schematic curve of the temperature averaged over the circumference of the teat, extending from the free end of the teat to the root of the teat, there where the teat merges into the udder. The solid line shows a reference temperature curve for the relevant animal, said curve representing a good blood circulation. When the measured temperature values produce the curve according to the broken line, the average temperature appears to be too high. This may be an indication of an udder infection. In dependence of a pre-set permissible difference, the comparing device may issue a warning signal at a point of time t₂. In the case of a measured temperature curve according to the dashed-dotted line, there is indicated a lower average temperature value, which may indicate an insufficient pre-stimulation. In dependence of a pre-set permissible difference, the comparing device may indicate at a point of time t₁ a signal by means of which the connection of the teat cup can be stopped and the teat cup is disconnected from the teat. The signal may also serve for re-activating the pre-stimulation device, e.g. during a longer time than used before. It will be obvious that also other process steps performed prior to the control step may be adjusted by means of a feedback signal emanating from the comparing device 9. It is noticed that issuing a signal may take place when the pre-set permissible difference has been exceeded during a predetermined, possibly adjustable period of time.

For the purpose of not using unnecessary energy and not storing unnecessary temperature data, the device is provided with an activating device for activating the temperature sensor 6. Such an activating device may be constituted by a detection device for detecting the presence of a teat in the teat cup as described in NL-A-1012529. This detection device is also suitable for deactivating the temperature sensor 6, in particular at the moment when the detection device does no longer detect a teat in the teat cup.

For the reference temperature values to be stored in the memory 8 may serve data inputted by a manager or farmer. Alternatively or additionally the temperature sensor may determine the reference temperature values itself. In particular historical temperature values, in other words temperature values measured during previous control steps, may be used. In particular a progressive average, i.e. the average temperature value over a predetermined number of control steps, e.g. ten, appears to be highly suitable for being used as reference temperature values. In this manner the reference temperature values are updated continuously. It will be obvious that also other ways of updating the temperature values will be applicable.

Although in the described embodiment the temperature sensor is disposed in a teat cup, the temperature sensor may also be disposed in a so-called cleaning teat cup in which the teat is cleaned, or in another cleaning device.

The temperature sensor 6 is preferably constituted by a contactless sensor, e.g. an infrared sensor.

## Claims

1. A device for milking an animal, such as a cow, provided with a milking machine with a teat cup (3) to be connected to a teat (5) of an animal, said teat cup (3) being provided with at least one temperature sensor (6), said device being provided with an activating device for activating the temperature sensor (6), **characterized in that** the activating device is also suitable for deactivating the temperature sensor (6).

2. A device as claimed in claim 1, **characterized in that** the activating device is constituted by a detection device for detecting the presence of a teat (5) in the teat cup (3).

3. A device as claimed in claim 1 or 2, **characterized in that** the device is provided with an identification device for identifying an animal and the relevant teat (5) and/or the relevant quarter.

4. A device as claimed in any one of the preceding claims, **characterized in that** the temperature sensor (6) is capable of being connected with a computer processing unit (7).

5. A device as claimed in claim 4, **characterized in that** the computer processing unit (7) comprises a memory (8) for storing reference temperature values.

6. A device as claimed in claim 5, **characterized in that** the computer processing unit (7) comprises a comparing unit (9) for comparing the measured temperature values with the reference temperature values and for issuing a comparison result signal.

7. A device as claimed in claim 4, 5 or 6, **characterized in that** the computer processing unit (7) comprises a comparing unit (9) for comparing the measured temperature values emanating from different teats of the animal and for issuing a comparison result signal.

8. A device as claimed in claim 6 or 7, **characterized in that** the device is provided with a stimulating device for stimulating the teat (5), the stimulating device being controlled at least partially on the basis of the comparison result signal.

9. A device as claimed in any one of the preceding claims, **characterized in that** the teat cup (3) is constituted by a cleaning teat cup.

10. A device as claimed in any one of the preceding claims, **characterized in that** the device comprises a milking robot with a robot arm carrying a teat cup for automatically milking an animal.
